# EUROPÄISCHE PATENTSCHRIFT

(11) **EP 0 568 864 B1**
(45) Veröffentlichungstag und Bekanntmachung des Hinweises auf die Patenterteilung: **14.02.1996**
(21) Anmeldenummer: 93106467.9
(22) Anmeldetag: 21.04.1993
(51) Int. Cl.: B01D 3/32, B01D 3/00

(54) **Destillationskolonne mit Seitenstromentnahme für Dampf**
Distillation column with side stream vapour bleeding
Colonne de distillation à soutirage latéral de vapeur

(30) Priorität: 04.05.1992 DE 4214738
(43) Veröffentlichungstag der Anmeldung: 10.11.1993
(73) Patentinhaber: BAYER AG, D-51368 Leverkusen (DE)
(72) Erfinder: Taurat, Siegfried, W-5090 Leverkusen 1 (DE); Steude, Heinrich, Dipl.-Ing., W-5090 Leverkusen 1 (DE); Deibele, Ludwig, Dipl.-Ing., W-5000 Köln 1 (DE); Alpers, Heinz-Jürgen, Dipl.-Ing., W-4150 Krefeld 11 (DE)

(56) Entgegenhaltungen:
- DD-A- 125 821
- DE-A- 3 102 780
- DE-A- 3 422 575

## Beschreibung

Die Erfindung betrifft eine Destillationskolonne mit einer Dampf-Seitenstromentnahme und einem Kondensator zur Kondensation des entnommenen dampfförmigen Produktes in der Seitenstromentnahme.

Das im Sumpf von Destillationskolonnen flüssig abgenommene Sumpfprodukt enthält häufig hochsiedende organische Rückstände oder Salze. Um diese unerwünschten Nebenprodukte abzutrennen, erfolgt die Entnahme des Hauptproduktes dampfförmig im Seitenstrom. Bei Vorliegen eines großen Trennfaktors zwischen beiden genügt hierfür eine Seitenstromentnahme, die nur aus einem Seitenstromkondensator besteht und eine Destillationsstufe darstellt. Reicht diese Trennung nicht aus, muß zwischen Hauptdestillationskolonne und Seitenstromkondensator eine Seitenstromkolonne geschaltet werden.

Übliche Praxis ist es heute, an das Brüdenrohr für die dampfförmige Seitenstromentnahme einen fallend ausgeführten Seitenstromkondensator anzuschließen. Das Kondensat wird durch eine Pumpe abgezogen, deren Leistung entweder konstant ist oder über eine Kaskade durch die Temperatur, die Zulaufmenge oder den Sumpfstand der Kolonne geregelt wird. Die Pumpe wird so betrieben, daß der untere Teil der Kühlfläche des Seitenstromkondensators mit Kondensat abgedeckt ist. Kondensiert weniger, als die Pumpe wegfördert, so sinkt der Flüssigkeitsstand im Seitenstromkondensator, dadurch wird mehr Kühlfläche freigegeben und der Kondensatanfall wächst wieder. Kondensiert dagegen mehr als die Pumpe abzieht, so steigt der Flüssigkeitsstand im Kondensator an, es wird Kühlfläche abgedeckt und der Kondensatanfall sinkt. Somit ergibt sich eine selbsttätige Regelung.

Bei dieser Art der Seitenstromentnahme treten Probleme auf, wenn der Seitenstromkondensator beim Anfahren der Anlage mit Luft gefüllt ist, oder wenn beim Destillationsbetrieb die Brüden nicht kondensierbare Gase enthalten. Diese Inerten (Luft bzw. nicht kondensierbare Anteile) können nur in geringem Maße über die Austragspumpe abgezogen werden. Auch der weg durch die Seitenstromleitung (Brüdenrohr) zurück zur Kolonne entgegen der Dampfströmung ist versperrt. Somit belegen die Inerten die Kühlflächen des Seitenstromkondensators, verschlechtern den Wärmeübergang und führen allmählich zu seinem Versagen. Abhilfe kann hier nur ein zeitweises Belüften des Kondensators schaffen, wobei er dann zur Vermeidung von Produktverlusten von der Kolonne getrennt werden muß. Dadurch werden die Betriebszeiten der Anlage verkürzt.

Der Erfindung liegt die Aufgabe zugrunde, die durch die Inerten verursachten Schwierigkeiten mit einfachen apparativen Maßnahmen zu vermeiden.

Diese Aufgabe wird bei einer Destillationskolonne mit einem Seitenstromkondensator erfindungsgemäß dadurch gelöst, daß die Brüdenleitung der Seitenstromentnahme in ein Tauchgefäß mündet, desses oberes Ende mit dem Kondensator verbunden ist, aus dem das Kondensat der Seitenstromentnahme in das Tauchgefäß zurückläuft und dessen unteres Ende mit einer Austragspumpe verbunden ist und daß eine am oberen Ende des Kondensators , angebrachte Inertgasleitung oberhalb der Seitenstromentnahme in die Kolonne zurückgeführt ist.

Falls eine zusätzliche destillative Reinigung des Seitenstromes erforderlich ist, kann in die Seitenstromleitung eine Seitenstromkolonne eingebaut werden, die mit einem Rücklauf versehen ist, der in Strömungsrichtung gesehen hinter der Austragspumpe abzweigt.

Für den Fall, daS zu wenig Inerte durch die Inertgasleitung zurück in die Kolonne strömen und deshalb Brüden aus der Kolonne diesen Weg zum Kondensator nehmen, kann die Inertgasleitung zusätzlich mit Stickstoff beaufschlagt werden.

Mit Hilfe der erfindungsgemäßen Vorrichtung können die Inerten problemlos in die Kolonne zurückgeführt werden. Der zusätzliche apparative Aufwand ist gering. Insbesondere können auch bestehende Anlagen ohne weiteres nachgerüstet werden. Mit der Erfindung wird auch die Regelung der Dampfmenge in der Seitenstromleitung erleichtert und verbessert.

Im folgenden werden Ausführungsbeispiele der Erfindung anhand einer Zeichnung näher erläutert. Es zeigen:
- Fig. 1: ein Fließschema für eine Destillationskolonne mit Tauchgefäß und Kondensator und
- Fig. 2: eine Destillationskolonne mit den gleichen Zusatzeinrichtungen wie bei Fig. 1, jedoch mit zusätzlich eingebauter Seitenstromkolonne.

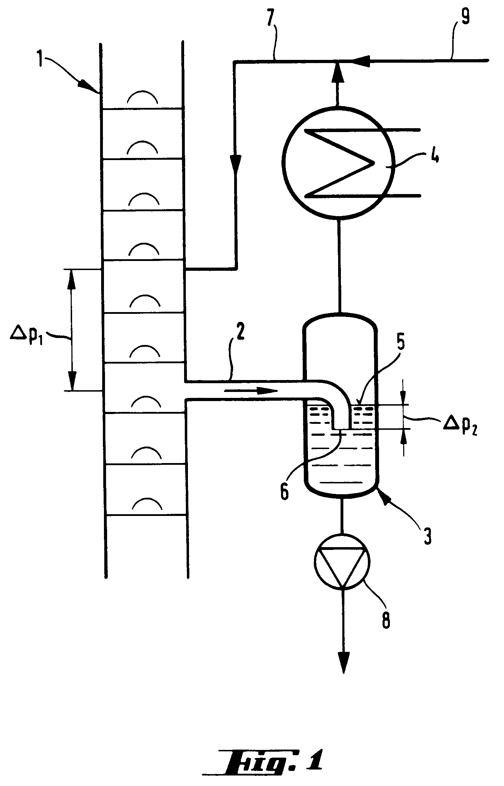

Gemäß Fig. 1 strömen die aus der Kolonne 1 entnommenen Brüden durch die Seitenstromleitung 2 (Brüdenrohr) in das Tauchgefäß 3 und von dort in den oberhalb angeordneten Kondensator 4. Die aus dem Kondensator 4 zurücklaufende Flüssigkeit sammelt sich im Tauchgefäß 3 bis zur Höhe des Flüssigkeitsspiegels 5, der oberhalb der Mündung 6 des Brüdenrohres 2 liegt. Auf diese Weise bildet sich ein Tauchverschluß in dem Gefäß 3 aus, der eine selbsttätige Regelung der Kondensatmenge ermöglicht. Der Kondensator 4 ist an seinem oberen Ende mit einer Inertgasleitung 7 verbunden, die in die Kolonne 1 zurückgeführt ist und oberhalb der Brüdenleitung 2 in die Kolonne mündet. Durch die Leitung 7 werden die Inerten (Luft bzw. andere nicht kondensierbare gasförmige Anteile) in die Kolonne 1 zurückgeführt.

Die der Eintauchtiefe des Brüdenrohrs 2 im Gefäß 3 entsprechende Druckdifferenz Δp₂ wird durch den Druckverlust Δp₁ des Kolonnenabschnittes zwischen der Inertgasleitung 7 und dem Brüdenrohr 2 bestimmt und beträgt normalerweise ca. 10 mm. Aus dem Tauchgefäß 3 entnimmt die Austragspumpe 8 eine vorgegebene Flüssigkeitsmenge (Kondensat). Kondensiert weniger Flüssigkeit als die Pumpe 8 wegfördern kann, so sinkt der Flüssigkeitsspiegel im Tauchgefäß 3 ab, so daß eine größere Dampfmenge zum Kondensator 4 strömt und der Kondensatanfall ebenfalls zunimmt. Wird dagegen eine größere Flüssigkeitsmenge auskondensiert, als die Pumpe 8 abziehen kann, so steigt der Flüssigkeitsspiegel im Tauchgefäß 3 an. Als Folge davon verringert sich die in den Kondensator 4 strömende Dampfmenge und damit auch der Kondensatanfall. Mit diesen einfachen apparativen Maßnahmen wird somit eine betriebssichere und zuverlässige selbsttätige Regelung der Kondensatmenge erreicht.

Für den Fall, daß zu wenig Inerte durch die Inertgasleitung 7 strömen und die Gefahr besteht, daß Brüden aus der Kolonne 1 über die Inertgasleitung 7 in den Kondensator 4 eintreten, wird die Inertgasleitung 7 über die Zuführung 9 mit Stickstoff beaufschlagt.

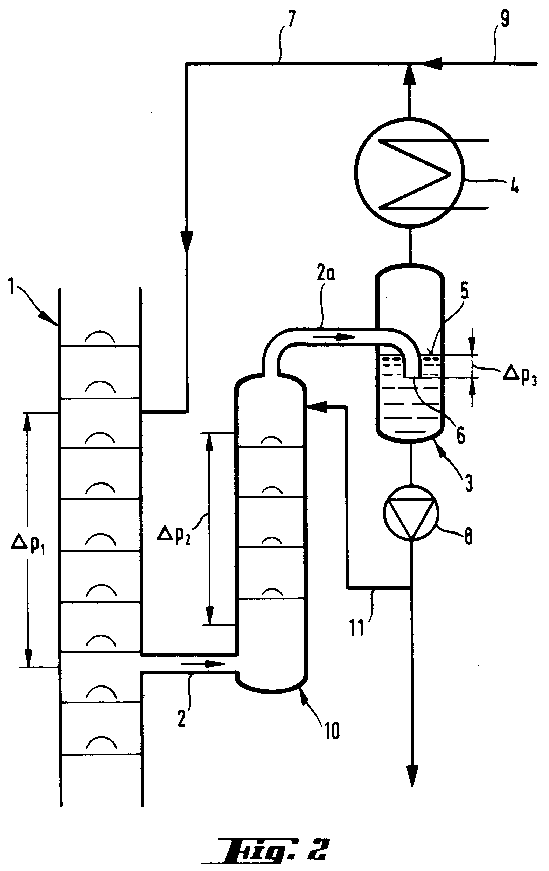

In manchen Fällen ist eine zusätzliche Reinigung des im Seitenstrom abgezogenen dampfförmigen Produktes mit Hilfe einer weiteren destillativen Trennung erforderlich. Zu diesem Zweck wird die Apparatur gemäß Fig. 1 in der Weise modifiziert (siehe Fig. 2), daß in die Brüdenleitung 2 eine Seitenstromkolonne 10 eingebaut wird. Der erforderliche Rücklauf 11 für die Seitenstromkolonne 10 zweigt (in Strömungsrichtung) hinter der Austragspumpe 8 ab. Im stationären Betrieb gilt in diesem Fall, daß die Druckdifferenz Δp₁ in dem Kolonnenabschnitt zwischen der Inertgasleitung 7 und der Seitenstrom- bzw. Brüdenleitung 2 gleich dem Druckabfall Δp₂ in der Seitenstromkolonne 10 plus der der Eintauchtiefe des Brüdenrohrs im Tauchgefäß 3 entsprechenden Druckdifferenz Δp₃ ist. Im übrigen stimmen die Apparaturen von Fig. 2 und Fig. 1 überein.

### Beispiel

Es wurde eine Destillationskolonne (450 mm Durchmesser und 4 m Füllhöhe) zur Aufarbeitung von Dimethyldicarbonat bei einem Kopfdruck von 1 mbar und einem Sumpfdruck von 5 mbar betrieben. Die dampfförmige Seitenstromentnahme befand sich direkt über dem Sumpf. Ihr Brüdenrohr hatte 225 mm Durchmesser. Die Entnahmemenge betrug 24 kg/h. Nur mit der hier vorgeschlagenen Anordnung der dampfförmigen Seitenstromentnahme war ein Dauerbetrieb möglich. Erschwerend trat hinzu, daß das Sumpfprodukt Kohlendioxid abspaltet.

## Patentansprüche

1. Destillationskolonne mit einer Dampf-Seitenstromentnahme und einem Kondensator (4) zur Kondensation des entnommenen dampfförmigen Produktes in der Seitenstromentnahme, dadurch gekennzeichnet, daß die Brüdenleitung (2) der Seitenstromentnahme in ein Tauchgefäß (3) mündet, dessen oberes Ende so mit dem Kondensator verbunden ist, daß das Kondensat der Seitenstromentnahme in das Tauchgefäß (3) zurückläuft, und dessen unteres Ende mit einer Austragspumpe (8) verbunden ist und daß eine am oberen Ende des Kondensators (4) angebrachte Inertgasleitung (7) oberhalb der Seitenstromentnahme (2) in die Kolonne (1) zurückgeführt ist.

2. Destillationskolonne nach Anspruch 1, dadurch gekennzeichnet, daß in der Brüdenleitung(2) eine Seitenstromkolonne (10) angeordnet ist, die mit einem Rücklauf (11) versehen ist, der in Strömungsrichtung gesehen hinter der Austragspumpe (8) abzweigt.

3. Destillationskolonne nach Anspruch 1 bis 2, dadurch gekennzeichnet, daß die Inertgasleitung (7) eine Zuführung (9) für Stickstoff aufweist.

## Claims

1. A distillation column with vapour sidestream removal and a condenser (4) for condensing the vaporous product removed in the sidestream removal, characterized in that the vapour pipe (2) of the sidestream removal opens into a dip tank (3) of which the upper end is connected to the condenser in such a way that the condensate of the sidestream removal runs back into the dip tank (3) while its lower end is connected to a discharge pump (8) and in that an inert gas pipe (7) arranged at the upper end of the condenser (4) is returned to the column (1) above the sidestream removal (2).

2. A distillation column as claimed in claim 1, characterized in that a sidestream column (10) provided with a return pipe (11) which branches off behind the discharge pump (8) in the direction of flow is arranged in the vapour pipe (2).

3. A distillation column as claimed in claims 1 and 2, characterized in that the inert gas pipe (7) has an inlet (9) for nitrogen.

## Revendications

1. Colonne de distillation présentant un soutirage latéral de vapeur et un condenseur (4) pour la condensation du produit soutiré sous forme de vapeur dans le soutirage latéral, caractérisée en ce que la canalisation des fumées (2) du soutirage latéral aboutit dans une cuve à immersion (3), dont l'extrémité supérieure est reliée au condenseur, de sorte que le condensat du soutirage latéral est renvoyé dans la cuve à immersion (3) et dont l'extrémité inférieure est reliée à une pompe de soutirage (8) et en ce qu'une canalisation de gaz inerte fixée à l'extrémité supérieure du condenseur (4) est renvoyée dans la colonne (1) au-dessus du soutirage latéral (2).

2. Colonne de distillation selon la revendication 1, caractérisée en ce qu'est disposée dans la canalisation des fumées (2) une colonne latérale (10) qui est munie d'un reflux (11) qui s'embranche dans la direction de l'écoulement après la pompe de soutirage (8).

3. Colonne de distillation selon l'une quelconque des revendications 1 et 2, caractérisée en ce que la canalisation de gaz inerte (7) présente une alimentation (9) pour de l'azote.
